# EUROPÄISCHE PATENTANMELDUNG

(11) **EP 3 503 259 A1**
(43) Veröffentlichungstag der Anmeldung: **26.06.2019**
(21) Anmeldenummer: 17208968.2
(22) Anmeldetag: 20.12.2017
(51) Int. Cl.: H01M 4/04

(54) **VERFAHREN ZUR BEARBEITUNG EINES ELEKTRODENMATERIALS**

(71) Anmelder: Manz AG, 72768 Reutlingen (DE)
(72) Erfinder: Schaupp, Martin, 72764 Reutlingen (DE); Dazer, Stefan, 78078 Niedereschach (DE); Carrasco, Francisco, 72827 Wannweil (DE)
(74) Vertreter: Kohler Schmid Möbus Patentanwälte

(57) **Zusammenfassung**

Ein Verfahren zur Bearbeitung und/oder Herstellung eines Elektrodenmaterials (1), das eine Trägerfolie (2) umfasst, die auf einer ersten Seite eine erste Schicht (3) mit zumindest einem aktiven Material und/oder auf einer zweiten gegenüberliegenden Seite eine zweite Schicht (4) mit zumindest einem aktiven Material aufweist, insbesondere für eine galvanische Zelle, umfasst die Verfahrensschritte:
a. In zumindest einem Bereich (5) Entfernen der ersten und/oder zweiten Schicht (3, 4) bis zur Trägerfolie (2);
b. Verdichten der ersten und/oder zweiten Schicht (3, 4) nach dem Entfernen der ersten und/oder zweiten Schicht (3, 4) in dem zumindest einen Bereich (5).

## Beschreibung

Die Erfindung betrifft ein Verfahren zur Bearbeitung eines Elektrodenmaterials, insbesondere für eine galvanische Zelle.

Eine galvanische Zelle ist eine Vorrichtung zur spontanen Umwandlung von chemischer in elektrische Energie. Von besonderer Bedeutung sind Primärzellen, die häufig als Batterie, und Sekundärzellen, die häufig auch als Akku bezeichnet werden. Nach einer Entladung können Sekundärzellen durch eine gegenüber der Entladung gegenläufige Stromrichtung wieder neu aufgeladen werden. Die chemischen Prozesse in der Sekundärzelle laufen umkehrbar ab. Häufig werden für galvanische Zellen folienartige Elektroden verwendet.

Dabei wird eine Trägerfolie beidseitig mit aktivem Material beschichtet. Nach dem Beschichten wird das folienartige Elektrodenmaterial verdichtet, unter anderem mit dem Ziel, eine bessere Haftung des aktiven Materials auf der Trägerfolie zu erzielen. Das Verdichten wird häufig mit einer Kalanderpresse durchgeführt. Durch die hohen Liniendrücke der Kalanderpresse werde einzelne Körner des aktiven Materials sowie Partikel in die Trägerfolie hineingepresst und schädigen diese irreparabel. Ein nachfolgendes Entfernen von aktivem Material kann aus unterschiedlichen Gründen notwendig sein. Beispielsweise kann es notwendig sein, Bereiche der Trägerfolie freizulegen, sodass diese anschließend verschweißt werden kann. Dieser Bereich der Trägerfolie muss eine hohe Zugfestigkeit aufweisen. Die Schweißbarkeit wird beeinträchtigt, wenn es nicht gelingt, beim Entfernen des aktiven Materials, dieses vollständig zu entfernen. Insbesondere können in die Trägerfolie eingepresste Körner und Partikel den Schweißprozess behindern. Wird darauf Wert gelegt, sämtliche Körner und Partikel aus der Trägerfolie zu entfernen, so kann es zu Beschädigungen der Trägerfolie kommen, sodass deren Flexibilität und Zugfestigkeit leidet.

Eine Verbesserung der Flexibilität und Zugfestigkeit kann somit nur zum Nachteil der Schweißbarkeit der Trägerfolie erzielt werden, weil die eingepressten Körner und Partikel nur unzureichend entfernt werden.

Aufgabe der vorliegenden Erfindung ist es, ein Verfahren zur Bearbeitung und/oder Herstellung eines Elektrodenmaterials bereitzustellen, das es erlaubt, das Elektrodenmaterial, insbesondere eine Trägerfolie des Elektrodenmaterials, in nachfolgenden Prozessschritten zu be- und verarbeiten, ohne dass es zu einer Beeinträchtigung der Zugfestigkeit und Flexibilität der Trägerfolie kommt.

Gelöst wird diese Aufgabe erfindungsgemäß durch ein Verfahren zur Bearbeitung und/oder Herstellung eines Elektrodenmaterials, das eine Trägerfolie umfasst, die auf einer ersten Seite eine erste Schicht mit zumindest einem aktiven Material und/oder auf einer zweiten gegenüberliegenden Seite eine zweite Schicht mit zumindest einem aktiven Material aufweist, insbesondere für eine galvanische Zelle, mit den Verfahrensschritten:
a. in zumindest einem Bereich Entfernen der ersten und/oder zweiten Schicht bis zur Trägerfolie;
b. Verdichten der ersten und/oder zweiten Schicht nach dem Entfernen der ersten und/oder zweiten Schicht in dem zumindest einen Bereich.

Dabei kann die Trägerfolie einseitig oder beidseitig zumindest bereichsweise beschichtet sein. Jede Schicht kann eine oder mehrere Lagen aufweisen. Das Verdichten der verbleibenden Schicht(en) erfolgt erfindungsgemäß nachdem in zumindest einem Bereich zumindest eine der Schichten entfernt wurde. Bei dem Elektrodenmaterial kann es sich beispielsweise um Elektrodenmaterial für eine Kathode handeln. Als Kathode bezeichnet man eine Elektrode, die beim Anschluss an einen Verbraucher, also beispielsweise beim Betrieb eines Elektrofahrzeugs, Elektronen aufnimmt. Die Kathode ist in diesem Fall die positive Elektrode. Im Fall einer kathodischen Elektrode enthält die Trägerfolie vorzugsweise Aluminium. Die erste und/oder zweite Schicht der kathodischen Elektrode enthält beispielsweise ein aktives Material, welches Lithium in ionischer oder metallischer Form reversibel einlagern oder wieder auslagern kann.

Alternativ kann das Elektrodenmaterial für eine Anode ausgebildet sein. Als Anode wird eine Elektrode bezeichnet, die beim Anschluss an einen Verbraucher, beispielsweise beim Betrieb eines Elektrofahrzeugs, Elektronen abgibt. Die Anode ist in diesem Fall die negative Elektrode. Die Trägerfolie einer Anode enthält vorzugsweise Kupfer. Die erste und/oder zweite Schicht einer anodischen Elektrode kann ein Naturgraphit aufweisen. Weiterhin kann die erste und/oder zweite Schicht ein beschichtetes künstliches Graphit oder ein beschichtetes Naturgraphit aufweisen.

Überraschenderweise hat sich gezeigt, dass die erste und/oder zweite Schicht auch ohne vorherige Verdichtung beziehungsweise vorhergehendes Kalandrieren ausreichend an der Trägerfolie anhaftet, sodass eine Bearbeitung des Elektrodenmaterials vor dem Verdichten möglich ist. Wenn die Entfernung der ersten und/oder zweiten Schicht erfolgt, ehe eine Verdichtung erfolgt, ist es nicht notwendig in die Trägerfolie eingepresste Körner oder Partikel zu entfernen. Eine Beschädigung der Trägerfolie, wo diese später geschweißt werden muss, kann somit vermieden werden.

Durch das Verdichten der ersten und/oder zweiten Schicht kann die Schichtdicke der ersten und/oder zweiten Schicht eingestellt werden. Alternativ oder zusätzlich kann durch das Verdichten die Porosität der ersten und/oder zweiten Schicht eingestellt werden.

Die erste und/oder zweite Schicht kann beispielsweise in einem Bereich entfernt werden, in dem das Elektrodenmaterial kontaktiert werden soll.

Weiterhin ist es denkbar, dass die erste und/oder zweite Schicht in einem Bereich entfernt wird, in dem ein Versatz der ersten und zweiten Schicht besteht. Wenn die erste und die zweite Schicht auf den gegenüberliegenden Seiten der Trägerfolie nicht miteinander bündig sind, wenn also ein Versatz besteht, kann darunter die Effizienz der mit dem Elektrodenmaterial hergestellten galvanischen Zelle leiden. Daher ist es erstrebenswert, einen Versatz zu entfernen. Das Entfernen von Schichten im Bereich eines Versatzes kann außerdem dazu führen, dass galvanische Zellen mit weniger Verschnitt hergestellt werden können.

Gemäß einer Verfahrensvariante kann vorgesehen sein, dass der Versatz der ersten und zweiten Schicht optisch erfasst wird. Somit kann optisch der Bereich erfasst und bestimmt werden, in dem die erste und/oder zweite Schicht entfernt werden soll.

Die erste und/oder zweite Schicht kann mittels eines Lasers oder chemisch entfernt werden. Dabei ist eine Entfernung mittels Laser zu bevorzugen, da bei einer chemischen Entfernung der ersten und/oder zweiten Schicht eine Maskierung notwendig wäre, die am Rand der ersten und/oder zweiten Schicht auszurichten wäre.

Das Entfernen der ersten und/oder zweiten Schicht kann zweistufig erfolgen. Insbesondere kann zunächst eine Grobentfernung der ersten und/oder zweiten Schicht und anschließend eine Feinentfernung der ersten und/oder zweiten Schicht erfolgen. Dadurch kann sichergestellt werden, dass die Trägerfolie beim Entfernen der ersten und/oder zweiten Schicht nicht beschädigt wird.

Die erste und/oder zweite Schicht kann zunächst mit einer ersten Laserleistung und nachfolgend mit einer zweiten, geringeren Laserleistung entfernt werden. Somit kann die Grobentfernung mit einer größeren Laserleistung und die Feinentfernung mit einer geringeren Laserleistung durchgeführt werden.

Eine besonders vorteilhafte und effektive Entfernung der ersten und/oder zweiten Schicht kann dadurch erfolgen, dass ein Laser mäanderförmig, zickzackförmig oder spiralförmig über den Bereich bewegt wird, in dem die erste und/oder zweite Schicht entfernt werden soll. Der Laser kann dabei mehrmals mäanderförmig, zickzackförmig oder spiralförmig über den Bereich bewegt werden.

Das Entfernen der ersten und/oder zweiten Schicht kann insbesondere optisch überwacht werden. Somit kann beispielsweise optisch festgestellt werden, wann von einer Grobentfernung auf eine Feinentfernung umgeschaltet werden muss.

Alternativ oder zusätzlich kann überwacht werden, ob die erste und/oder zweite Schicht im Bereich vollständig entfernt wurde. Somit kann vermieden werden, dass im Bereich Beschichtungsmaterial verbleibt, welches den Schweißvorgang behindern würde. Andererseits kann auf optische Art und Weise überwacht werden, wann die Beschichtung vollständig entfernt ist, um die Trägerfolie nicht unnötig lange mit einem Laser zu beanspruchen. Beispielsweise kann das Reflektionsverhalten im Bereich überwacht werden. Ändert sich dieses signifikant, spricht das für eine vollständige Entfernung der Schicht in diesem Bereich.

Besonders bevorzugt ist es, wenn die erste und zweite Schicht durch Kalandern verdichtet werden. Das Kalandern kann dabei mit einem sehr hohen Liniendruck erfolgen, da die Beschädigung von Trägerfolien in einem Bereich, der später geschweißt werden soll, nicht zu befürchten ist.

Nach dem Verdichten kann das Elektrodenmaterial aufgewickelt werden. Dadurch kann das Elektrodenmaterial platzsparend gelagert, transportiert und einfach weiterverarbeitet werden. Das Aufwickeln des Elektrodenmaterials ist insbesondere dann gut möglich, wenn ein Versatz der ersten und zweiten Schicht entfernt wurde, da dann kein Verzug beim Auf- oder Abwickeln entsteht.
Die Zellen können beispielsweise dadurch hergestellt werden, dass aus dem Elektrodenmaterial eine Elektrode herausgetrennt wird, insbesondere mittels Stanzen oder Laserschneiden. Anschließend können mehrere solcher Elektroden, insbesondere im Bereich der Trägerfolie, miteinander verschweißt werden.

In den Rahmen der Erfindung fällt auch eine Elektrode, die mit dem bzw. unter Anwendung des erfindungsgemäßen Verfahrens hergestellt ist.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1a: Elektrodenmaterial vor der Bearbeitung;
- Fig. 1b: Elektrodenmaterial nach dem Abtragen einer Schicht in einem Bereich;
- Fig. 2: ein Flussdiagramm zur Erläuterung des erfindungsgemäßen Verfahrens.

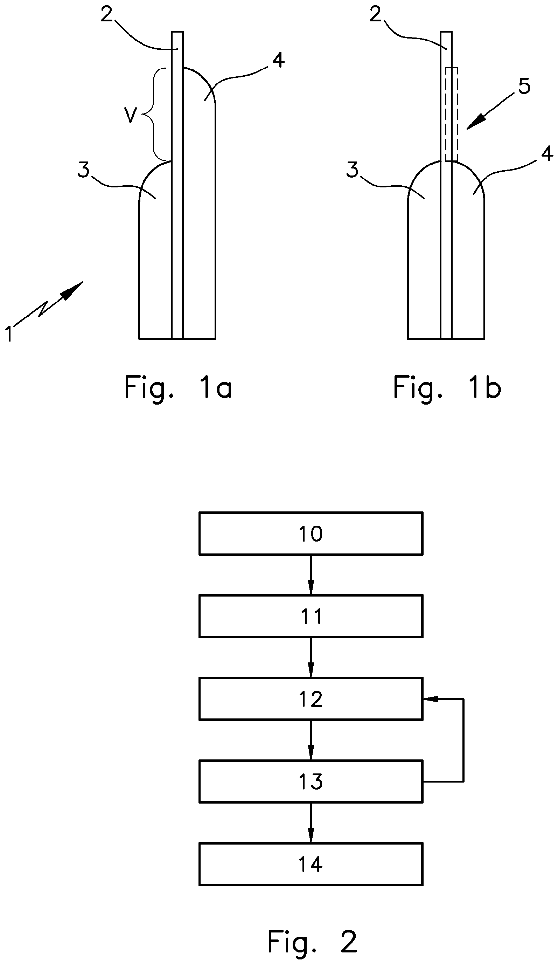

Die Fig. 1a zeigt Elektrodenmaterial 1 für eine galvanische Zelle. Das Elektrodenmaterial 1 umfasst eine Trägerfolie 2, die auf einer ersten Seite eine erste Schicht 3 und auf einer zweiten, gegenüberliegenden Seite eine zweite Schicht 4 aufweist. Bei den Schichten 3, 4 handelt es sich um aktives Material. Insbesondere handelt es sich um Anoden- oder Kathodenmaterial. Die Schichten 3, 4 können nacheinander oder gleichzeitig auf die Trägerfolie 2 aufgebracht worden sein. Die Schichten 3, 4 können eine oder mehrere Lagen von aktivem Material, auch unterschiedlichem aktivem Material, aufweisen. Der Fig. 1a kann man entnehmen, das zwischen der ersten Schicht 3 und der zweiten Schicht 4 ein Versatz V besteht. Ein solcher Versatz kann zum einen die Effektivität einer aus dem Elektrodenmaterial herzustellenden galvanischen Zelle, als auch die Weiterverarbeitung des Elektrodenmaterials 1 beeinflussen, beispielsweise, wenn das Elektrodenmaterial im Bereich der Trägerschicht 2 verschweißt werden soll.

Erfindungsgemäß ist vorgesehen, dass in einem Bereich 5 (Fig. 1b) eine Schicht entfernt wird. Im gezeigten Ausführungsbeispiel wurde die Schicht 4 im Bereich des Versatzes V beziehungsweise im Bereich 5 entfernt, sodass die Schichten 3, 4 auf beiden Seiten der Trägerfolie 2 zueinander bündig sind. Das Entfernen der Schicht 4 erfolgte vor dem Verdichten der Schichten 3, 4, sodass im Bereich 5 die Trägerfolie 2 nicht aufgrund eines Verdichtungsprozesses beschädigt wurde. Die Trägerfolie 2 hat somit in ihrem Bereich 5 ihre Zugfestigkeit und Schweißbarkeit behalten. Der Bereich 5 oder ein zusätzlicher Bereich könnte auch an anderer Stelle gewählt werden, z. B. in einem Kontaktierungsbereich.

Die Fig. 2 zeigt den Ablauf des erfindungsgemäßen Verfahrens. Zunächst wird eine Trägerfolie, die auf beiden Seiten mit aktiven Schichten beschichtet ist, bereitgestellt, siehe Schritt 10. Anschließend wird ein Bereich definiert, in dem die erste oder zweite Schicht entfernt werden soll, siehe Schritt 11.

Im Schritt 12 wird in dem vorher festgelegten Bereich die erste und/oder zweite Schicht entfernt, beispielsweise mittels eines Lasers. Im Schritt 13 wird überwacht, ob in dem Bereich die erste oder zweite Schicht vollständig entfernt wurde. Wenn nicht, wird mit dem Entfernen der Schicht im Schritt 12 fortgefahren. Bejahendenfalls erfolgt im Schritt 14 eine Verdichtung des aktiven Materials des Elektrodenmaterials, also der Schichten 3, 4.

Weitere Optionen und Varianten des Verfahrens ergeben sich aus den Ansprüchen und der allgemeinen Beschreibung.

## Patentansprüche

1. Verfahren zur Bearbeitung und/oder Herstellung eines Elektrodenmaterials (1), das eine Trägerfolie (2) umfasst, die auf einer ersten Seite eine erste Schicht (3) mit zumindest einem aktiven Material und/oder auf einer zweiten gegenüberliegenden Seite eine zweite Schicht (4) mit zumindest einem aktiven Material aufweist, insbesondere für eine galvanische Zelle, mit den Verfahrensschritten:
a. In zumindest einem Bereich (5) Entfernen der ersten und/oder zweiten Schicht (3, 4) bis zur Trägerfolie (2);
b. Verdichten der ersten und/oder zweiten Schicht (3, 4) nach dem Entfernen der ersten und/oder zweiten Schicht (3, 4) in dem zumindest einen Bereich (5).

2. Verfahren nach Anspruch 1, **dadurch gekennzeichnet, dass** die erste und/oder zweite Schicht (3, 4) in einem Bereich (5) entfernt wird, in dem ein Versatz (V) der ersten und zweiten Schicht (3, 4) besteht.

3. Verfahren nach einem der vorhergehenden Ansprüche, **dadurch gekennzeichnet, dass** der Versatz (V) von erster und zweiter Schicht (3, 4) optisch erfasst wird.

4. Verfahren nach einem der vorhergehenden Ansprüche, **dadurch gekennzeichnet, dass** die erste und/oder zweite Schicht (3, 4) in einem Kontaktierungsbereich entfernt wird.

5. Verfahren nach einem der vorhergehenden Ansprüche, **dadurch gekennzeichnet, dass** die erste und/oder zweite Schicht (3, 4) mittels eines Lasers oder chemisch entfernt wird.

6. Verfahren nach einem der vorhergehenden Ansprüche, **dadurch gekennzeichnet, dass** das Entfernen zumindest zweistufig erfolgt mit einer Grobentfernung gefolgt von einer Feinentfernung der ersten und/oder zweiten Schicht (3, 4).

7. Verfahren nach einem der vorhergehenden Ansprüche 5 oder 6, **dadurch gekennzeichnet, dass** die erste und/oder zweite Schicht (3, 4) zunächst mit einer ersten Laserleistung und nachfolgend mit einer zweiten geringeren Laserleistung entfernt wird.

8. Verfahren nach einem der vorhergehenden Ansprüche, **dadurch gekennzeichnet, dass** zur Entfernung der ersten und/oder zweiten Schicht (3, 4) ein Laser mäanderförmig, zickzackförmig oder spiralförmig über den Bereich (5) bewegt wird.

9. Verfahren nach einem der vorhergehenden Ansprüche, **dadurch gekennzeichnet, dass** das Entfernen der ersten und/oder zweiten Schicht (3, 4) insbesondere optisch überwacht wird.

10. Verfahren nach einem der vorhergehenden Ansprüche, **dadurch gekennzeichnet, dass** überwacht wird, ob die erste und/oder zweite Schicht (3, 4) im Bereich (5) vollständig entfernt wurde.

11. Verfahren nach einem der vorhergehenden Ansprüche, **dadurch gekennzeichnet, dass** die erste und zweite Schicht (3, 4) durch Kalandern verdichtet werden.

12. Verfahren nach einem der vorhergehenden Ansprüche, **dadurch gekennzeichnet, dass** das Elektrodenmaterial (1) nach dem Verdichten aufgewickelt wird.

13. Verfahren nach einem der vorhergehenden Ansprüche, **dadurch gekennzeichnet, dass** aus dem Elektrodenmaterial (1) eine Elektrode herausgetrennt wird, insbesondere mittels Stanzen oder Laserschneiden.

14. Elektrode, hergestellt nach einem Verfahren gemäß einem der vorhergehenden Ansprüche.
